# FASCICULE DE BREVET EUROPEEN

(11) **EP 3 898 388 B1**
(45) Date de publication et mention de la délivrance du brevet: **31.07.2024**
(21) Numéro de dépôt: 19842371.7
(22) Date de dépôt: 22.11.2019
(51) Int. Cl.: B62D 25/04, B62D 25/08, B62D 25/16, B62D 25/14, B62D 27/02

(54) **PIÈCE DE RENFORT ÉQUIPANT UN VÉHICULE AUTOMOBILE À L'ENCONTRE D'UN CHOC FRONTAL**
VERSTÄRKUNGSTEIL ZUR AUSSTATTUNG EINES KRAFTFAHRZEUGS GEGEN EINEN FRONTALAUFPRALL
REINFORCING PART EQUIPPING A MOTOR VEHICLE AGAINST A FRONTAL IMPACT

(30) Priorité: 20.12.2018 FR 1873553
(43) Date de publication de la demande: 27.10.2021
(73) Titulaire: Stellantis Auto SAS, 78300 Poissy (FR)
(72) Inventeur: RIVIERRE, Laurent, 75015 PARIS (FR); SAINT DENIS, Lionel, 92290 CHATENAY MALABRY (FR)
(86) Numéro de dépôt international: PCT/FR2019/052788
(87) Numéro de publication internationale: WO 2020/128179

(56) Documents cités:
- EP-A1- 2 230 158
- EP-A2- 0 990 577
- FR-A1- 2 932 149
- US-A1- 2005 046 237
- US-A1- 2016 090 126

## Description

### Domaine technique de l'invention

La présente invention revendique la priorité de la demande française 1873553 déposée le 20 décembre 2018.

La présente invention concerne une pièce de renfort avant côté habitacle assemblée destinée à protéger un habitacle d'un véhicule automobile, électrique ou hybride, vis-à-vis d'un choc frontal, la pièce de renfort avant côté habitacle assemblée comprenant une platine qui comprend une partie supérieure pourvue d'une collerette supérieure et une partie inférieure pourvue d'une collerette inférieure entre lesquelles est ménagée une partie intermédiaire. Elle concerne en outre un ensemble formé par une doublure d'aile avant, un support de suspension et un côté habitacle équipé d'une telle pièce de renfort avant côté habitacle assemblée. Elle concerne en outre un véhicule automobile pourvu d'au moins un moteur électrique apte à procurer un déplacement au véhicule automobile, le véhicule automobile étant pourvu d'un tel ensemble.

### Art antérieur

Un véhicule automobile est susceptible d'être soumis à un choc frontal, tel qu'un choc avec un piéton, une collision avec un autre véhicule automobile ou bien avec un bâtiment ou encore avec un autre obstacle analogue. Un tel choc frontal affecte plus particulièrement une face avant du véhicule automobile. Il en découle une nécessité de protéger au niveau de la troisième voie, autrement dit celle relative au berceau, des éléments structurants ou embarqués du véhicule automobile.

Il est connu d'équiper le véhicule automobile d'une pièce de renfort assemblé qui est destinée à augmenter une résistance au choc frontal de la face avant du véhicule automobile. Il est plus particulièrement connu d'équiper le véhicule automobile d'une pièce de renfort avant côté habitacle assemblée qui est prévue pour protéger un habitacle que comprend le véhicule automobile. Il est notamment connu d'équiper d'une telle pièce de renfort avant côté habitacle assemblée un véhicule automobile thermique, dont la propulsion est assurée par un moteur thermique. Le document EP 0 990 577 A2 divulgue les caractéristiques du préambule de la revendication 1.

### Résumé de l'invention

Or, les constructeurs automobiles développent de plus en plus des véhicules électriques ou hybrides dont la propulsion est assurée par au moins un moteur électrique pourvu de batteries électriques. De tels véhicules automobiles électriques tendent à avoir une masse plus importante que les véhicules automobiles thermiques, toutes choses étant égales par ailleurs.

Les pièces de renfort avant côté habitacle assemblées connues, adaptées pour des véhicules automobiles thermiques, s'avèrent insuffisantes pour garantir une tenue mécanique d'un véhicule automobile électrique ou hybride.

La présente invention vient améliorer la situation, en proposant une pièce de renfort avant côté habitacle assemblée adapté pour qu'un véhicule automobile électrique ou hybride offre une résistance mécanique suffisante lorsque le véhicule automobile électrique ou hybride est soumis à un choc frontal.

La pièce de renfort de la présente invention est une pièce de renfort avant côté habitacle assemblée destinée à protéger un habitacle d'un véhicule automobile, électrique ou hybride, vis-à-vis d'un choc frontal. La pièce de renfort avant côté habitacle assemblée comprend une platine qui comprend une partie supérieure pourvue d'une collerette supérieure et une partie inférieure pourvue d'une collerette inférieure entre lesquelles est ménagée une partie intermédiaire.

Selon la présente invention, la pièce de renfort avant côté habitacle assemblée est pourvue d'un moyen de renforcement d'une résistance mécanique de la pièce de renfort avant côté habitacle assemblée. Le moyen de renforcement comprend un raidisseur qui comprend une portion supérieure et une portion intermédiaire agencées en équerre qui sont aptes à venir en contact avec la partie supérieure et la partie inférieure. La portion intermédiaire est pourvue d'une patte de soudage configurée pour un soudage sur une pastille emboutie d'une partie d'élongation de la partie intermédiaire.

La pièce de renfort avant côté habitacle comprend avantageusement l'une quelconque au moins des caractéristiques techniques suivantes, prises seules ou en combinaison :
- la portion supérieure est équipée de quatre pattes de fixation du raidisseur, dont une première patte de fixation configurée pour un soudage entre le raidisseur et la pièce de renfort avant côté habitacle assemblée, dont une deuxième patte de fixation configurée pour un soudage entre le raidisseur et une doublure d'aile avant à travers une première encoche ménagée à l'intérieur d'une collerette supérieure, dont une troisième patte de fixation configurée pour un soudage entre le raidisseur et la pièce de renfort avant côté habitacle assemblée et dont une quatrième patte de fixation configurée pour un soudage entre le raidisseur, la pièce de renfort avant côté habitacle assemblée et un côté habitacle,
- la collerette supérieure est prévue pour être au moins partiellement soudée avec la doublure d'aile avant et un support de suspension,
- la collerette inférieure est prévue pour être soudée avec la doublure d'aile avant,
- le moyen de renforcement comprend une épaisseur de la pièce de renfort avant côté habitacle assemblée qui est comprise entre 1,2 mm et 1,4 mm.

La présente invention a aussi pour objet un ensemble formé par une doublure d'aile avant, un support de suspension et un côté habitacle équipé d'une telle pièce de renfort avant côté habitacle assemblée.

La présente invention a aussi pour objet un véhicule automobile pourvu d'au moins un moteur électrique apte à procurer un déplacement au véhicule automobile, le véhicule automobile étant pourvu d'un tel ensemble.

### Brève description des figures

L'invention sera mieux comprise à la lecture de la description non limitative qui suit, rédigée au regard des dessins annexés, dans lesquels :
[Fig. 1] - la figure 1 représente, en perspective, un ensemble de la présente invention ;
[Fig. 2] - la figure 2 illustre l'ensemble représenté sur la figure 1 équipé d'une pièce de renfort avant côté habitacle assemblée selon la présente invention ;
[Fig. 3] - la figure 3 illustre, depuis l'avant, la pièce de renfort avant côté habitacle assemblée représentée sur la figure 2 ;
[Fig. 4] - la figure 4 illustre, depuis l'habitacle, la pièce de renfort avant côté habitacle assemblée représentée sur la figure 2 ; et
[Fig. 5] - la figure 5 illustre un raidisseur équipant la pièce de renfort avant côté habitacle assemblée représentée sur les figures 3 à 5.

### Description détaillée de l'invention

Un véhicule automobile électrique ou hybride est susceptible d'être soumis à un choc frontal, tel qu'un choc avec un piéton, une collision avec un autre véhicule automobile ou bien avec un bâtiment ou encore avec un obstacle analogue. Un tel choc frontal affecte plus particulièrement une face avant du véhicule automobile électrique ou hybride. Un tel véhicule automobile électrique ou hybride est propulsé par au moins un moteur électrique pourvu de batteries électriques.

Le véhicule automobile est équipé d'une pièce de renfort assemblé qui est destinée à augmenter une résistance au choc frontal de la face avant du véhicule. Plus particulièrement, le véhicule automobile est équipé d'une pièce de renfort assemblé d'un habitacle que comprend le véhicule.

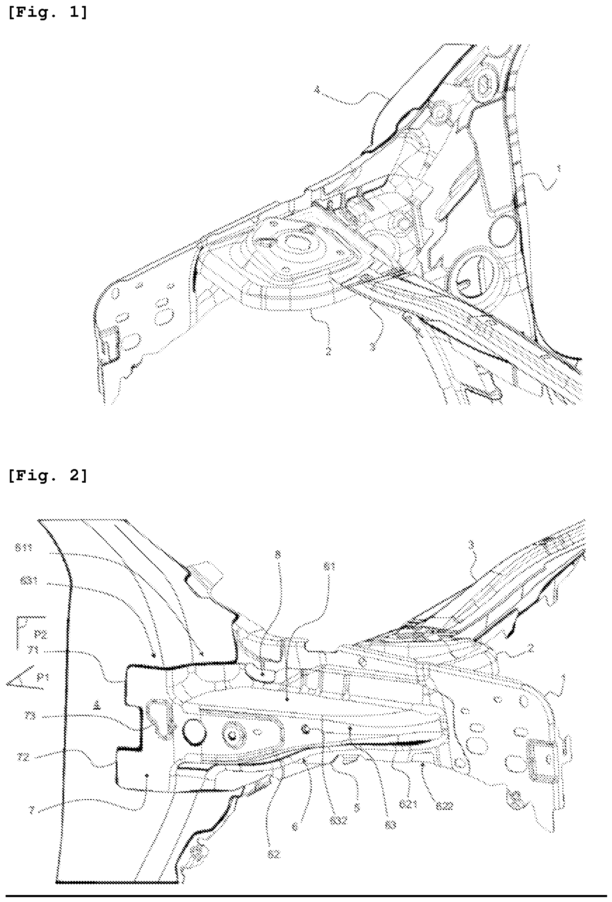

Sur la figure 1, sont illustrés des éléments du véhicule qui constituent un environnement de la présente invention, à savoir une doublure d'aile avant 1, un support de suspension 2, un collecteur d'auvent 3 et un côté habitacle 4, qui sont vus du côté moteur.

Sur la figure 2, sont illustrés vue du côté habitacle les mêmes éléments à savoir la doublure d'aile avant 1, le support de suspension 2, le collecteur d'auvent 3 et un côté habitacle 4, qui sont équipés d'une pièce de renfort avant côté habitacle assemblée 5 selon la présente invention. La pièce de renfort avant côté habitacle assemblée 5 est fixée sur le côté habitacle 4 et sur le collecteur d'auvent 3 par soudage.

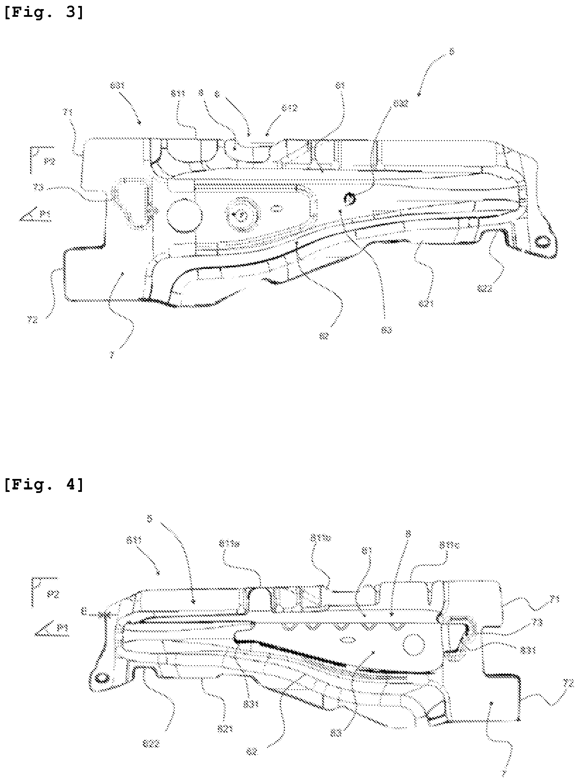

Sur les figures 3 et 4, la pièce de renfort avant côté habitacle assemblée 5 comprend une platine 6 agencée en une coque qui comprend une partie supérieure 61 et une partie inférieure 62 entre lesquelles est ménagée une partie intermédiaire 63. La partie supérieure 61 et la partie inférieure 62 sont sensiblement parallèles et ménagées à l'intérieur d'un plan respectif qui est parallèle à un premier plan P1. La partie intermédiaire 63 est quant à elle ménagée à l'intérieur d'un deuxième plan P2 qui est sensiblement orthogonal au premier plan P1. Il en résulte que la platine 6 est globalement agencée en une coque conformée en une cuvette.

La partie intermédiaire 63 est prolongée à une première extrémité 631 d'une partie d'élongation 7 qui est pourvue de deux pattes d'élongation 71, 72. La partie d'élongation 7 au moins partiellement et les pattes d'élongation 71, 72 sont destinées à être soudées sur le côté habitacle 4, et dans certain cas avec des pièces de renfort du pied avant. La partie d'élongation 7 comprend une pastille emboutie 73 qui est prévue pour recevoir au moins partiellement un raidisseur 8 selon la présente invention, le raidisseur 8 qui est plus particulièrement illustré sur la figure 4. La partie intermédiaire 63 est pourvue d'un orifice 632 afin de réaliser un pilote de mise en place du raidisseur 8 lorsque ce dernier est soudé sur le côté habitacle 4 lors de l'assemblage du raidisseur 8 et de la pièce de renfort avant côté habitacle assemblée 5.

La partie supérieure 61 est équipée sur sa longueur d'une collerette supérieure 611 qui est prévue pour être au moins partiellement soudée avec la doublure d'aile avant 1 et le support de suspension 2.

La collerette supérieure 611 est pourvue d'une première encoche 612 à l'intérieur de laquelle vient se loger partiellement le raidisseur 8. Ces dispositions permettent un soudage des trois pièces ensemble, à savoir le côté habitacle 4, la platine 6 et le raidisseur 8.

La partie inférieure 62 est également équipée sur sa longueur d'une collerette inférieure 621 qui est pourvue d'une deuxième encoche 622 qui offre un détrompage pour vérifier une présence ou une absence du raidisseur 8. La collerette inférieure 621 est prévue pour être soudée avec la doublure d'aile avant 1.

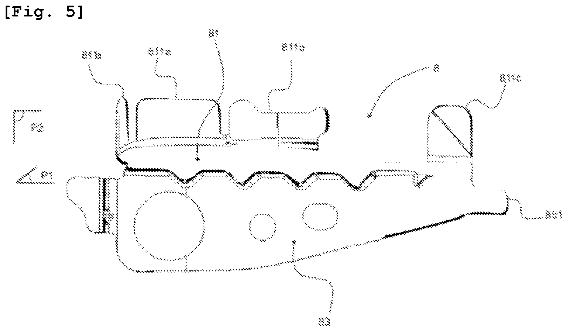

Sur la figure 5, le raidisseur 8 comprend une portion supérieure 81 qui est prévue pour venir en contact avec la partie supérieure 61 de la platine 6. La portion supérieure 81 s'étend également sensiblement à l'intérieur d'un plan parallèle au premier plan P1. Le raidisseur 8 comprend aussi une portion intermédiaire 83 qui est prévue pour venir en contact avec la partie intermédiaire 63 de la platine 6. On comprend en cela que les formes et dimensions de la portion supérieure 81 et de la partie supérieure 61 d'une part ainsi que les dimensions et formes de la portion intermédiaire 83 et de la partie intermédiaire 63 sont adaptée pour permettre un encastrement du raidisseur 8 à l'intérieur de la platine 6. La portion intermédiaire 83 est pourvue d'une patte intermédiaire 831 pour permettre un détrompage complémentaire sur le raidisseur 8 afin de savoir si ce dernier est présent ou non sur le véhicule. La portion intermédiaire 83 est pourvue d'une patte de soudage 832 qui est prévue pour être soudée sur la pastille emboutie 73.

La portion supérieure 81 est pourvue de quatre pattes de fixation 811a, 881b, 811c, 811d du raidisseur 8, dont une première patte de fixation 811a, une deuxième patte de fixation 811b, une troisième patte de fixation 811c et une quatrième patte de fixation 811d. La première patte de fixation 811a permet un soudage entre le raidisseur 8 et la pièce de renfort avant côté habitacle assemblée 5. La deuxième patte de fixation 811b permet un soudage entre le raidisseur 8 et la doublure d'aile avant 1 à travers la première encoche 612. La troisième patte de fixation 811c permet un soudage entre le raidisseur 8 et la pièce de renfort avant côté habitacle assemblée 5. La quatrième patte de vfixation 811d permet un soudage entre le raidisseur 8, la pièce de renfort avant côté habitacle assemblée 5 et le côté habitacle 4.

Sur la figure 5, la pièce de renfort avant côté habitacle assemblée 5 et le raidisseur 8 sont assemblés l'un avec l'autre, tels qu'ils sont conjointement assemblés sur le véhicule.

Pour renforcer une résistance mécanique de la pièce de renfort avant côté habitacle assemblée 5, la pièce de renfort avant côté habitacle assemblée 5 est susceptible de présenter une épaisseur comprise entre 1,2 mm et 1,4 mm.

On note aussi que la pièce de renfort avant côté habitacle assemblée 5 est réalisée en une nuance ES tandis que le raidisseur 8 est réalisé en une nuance DP590.

On note aussi à ce stade de la description un avantage de la présente invention que la pièce de renfort de la présente invention comporte des zones d'interface commune avec celles de pièce de renfort avant côté habitacle assemblée de l'art antérieur, dans un environnement tôlerie strictement identique. Ainsi l'encoche 622 permet de savoir quelle pièce de renfort est ferré sur le côté habitacle, celle de la présente invention ou bien celle de l'art antérieur. La patte intermédiaire 831 permet quant à elle de détecter la présence ou l'absence du raidisseur 8 sur la pièce de renfort avant côté habitacle assemblée 5.

## Revendications

1. Pièce de renfort avant côté habitacle assemblée (5) destinée à protéger un habitacle d'un véhicule automobile, électrique ou hybride, vis-à-vis d'un choc frontal, la pièce de renfort avant côté habitacle assemblée (5) comprenant une platine (6) qui comprend une partie supérieure (61) pourvue d'une collerette supérieure (611) et une partie inférieure (62) pourvue d'une collerette inférieure (621) entre lesquelles est ménagée une partie intermédiaire (63), la pièce de renfort avant côté habitacle assemblée (5) étant pourvue en outre d'un moyen de renforcement (8, E) d'une résistance mécanique de la pièce de renfort avant côté habitacle assemblée (5), ledit moyen de renforcement (8, E) comprenant un raidisseur (8), le raidisseur (8) comprenant une portion supérieure (81) et une portion intermédiaire (83) agencées en équerre qui sont aptes à venir en contact avec la partie supérieure (61) et la partie inférieure (62) du raidisseur, **caractérisée en ce que** la portion intermédiaire (83) est pourvue d'une patte de soudage (832) configurée pour un soudage sur une pastille emboutie (73) d'une partie d'élongation (7) de la partie intermédiaire (63).

2. Pièce de renfort avant côté habitacle assemblée (5) selon la revendication 1, **caractérisée en ce que** la portion supérieure (81) est équipée de quatre pattes de fixation (811a, 881b, 811c, 811d) du raidisseur (8), dont une première patte de fixation (811a) configurée pour un soudage entre le raidisseur (8) et la pièce de renfort avant côté habitacle assemblée (5), dont une deuxième patte de fixation (811b) configurée pour un soudage entre le raidisseur (8) et une doublure d'aile avant (1) à travers une première encoche (612) ménagée à l'intérieur d'une collerette supérieure (611), dont une troisième patte de fixation (811c) configurée pour un soudage entre le raidisseur (8) et la pièce de renfort avant côté habitacle assemblée (5) et dont une quatrième patte de fixation (811d) configurée pour un soudage entre le raidisseur (8), la pièce de renfort avant côté habitacle assemblée (5) et un côté habitacle (4).

3. Pièce de renfort avant côté habitacle assemblée (5) selon l'une quelconque des revendications précédentes, **caractérisée en ce que** la collerette supérieure (611) est prévue pour être au moins partiellement soudée avec la doublure d'aile avant (1) et un support de suspension (2).

4. Pièce de renfort avant côté habitacle assemblée (5) selon la revendication 3, **caractérisée en ce que** la collerette inférieure (621) est prévue pour être soudée avec la doublure d'aile avant (1).

5. Pièce de renfort avant côté habitacle assemblée (5) selon l'une quelconque des revendications précédentes, **caractérisée en ce que** le moyen de renforcement (8, E) comprend une épaisseur (E) de la pièce de renfort avant côté habitacle assemblée (5) qui est comprise entre 1,2 mm et 1,4 mm.

6. Ensemble formé par une doublure d'aile avant (1), un support de suspension (2) et un côté habitacle (4) équipé d'une pièce de renfort avant côté habitacle assemblée (5) selon l'une quelconque des revendications précédentes.

7. Véhicule automobile pourvu d'au moins un moteur électrique apte à procurer un déplacement au véhicule automobile, **caractérisé en ce que** le véhicule automobile est pourvu d'un ensemble selon la revendication 6.

## Patentansprüche

1. Zusammengebautes vorderseitiges Verstärkungsteil (5) zum Schutz eines Fahrgastraums eines Kraftfahrzeugs, Elektro- oder Hybridfahrzeugs vor einem Frontalaufprall, wobei das zusammengebaute vordere fahrgastraumseitige Verstärkungsteil (5) eine Platine (6) umfasst, die ein Oberteil (61) mit einem oberen Flansch (611) und ein Unterteil (62) mit einem unteren Flansch (621) umfasst, zwischen denen ein Zwischenteil (63) angeordnet ist, wobei das zusammengebaute fahrgasseitige vordere Verstärkungsteil (5) ferner mit einem Verstärkungsmittel (8) versehen ist E) einer mechanischen Festigkeit des vorderen Verstärkungsteils auf der Seite des zusammengebauten Fahrgastraums (5), wobei die Verstärkungsmittel (8, E) eine Versteifung (8) umfassen, wobei die Versteifung (8) einen oberen Abschnitt (81) und einen Zwischenabschnitt (83) umfasst, die winkelförmig angeordnet sind und in der Lage sind, mit dem oberen Abschnitt (61) und dem unteren Abschnitt (62) der Versteifung in Kontakt zu kommen, **dadurch gekennzeichnet, dass** der Zwischenabschnitt (83) mit einer Schweißlasche (832) versehen ist, die zum Schweißen auf einer Tiefziehscheibe (73) konfiguriert ist) einem Verlängerungsteil (7) des Zwischenteils (63).

2. Zusammengebautes vorderseitiges Verstärkungsteil (5) nach Anspruch 1, **dadurch gekennzeichnet, dass** der obere Abschnitt (81) mit vier Befestigungslaschen (811a, 881b, 811c, 811d) der Versteifung (8) versehen ist, von denen eine erste Befestigungslasche (811a) zum Schweißen zwischen der Versteifung (8) und dem zusammengebauten vorderseitigen Verstärkungsteil (5) ausgebildet ist, von denen eine zweite Befestigungslasche (811b) zum Schweißen zwischen der Versteifung (8) und eine Vorderflügelauskleidung (1) durch eine erste Kerbe (612) in einem oberen Flansch (611), wobei eine dritte Befestigungslasche (811c) zum Verschweißen zwischen der Versteifung (8) und dem vorderen, zusammengebauten, fahrgastseitigen Verstärkungsteil (5) ausgebildet ist, und eine vierte Befestigungslasche (811d) zum Verschweißen zwischen der Versteifung (8), dem vorderen, zusammengebauten fahrgastseitigen Verstärkungsteil (5) und einer Fahrgastseite (4) ausgebildet ist.

3. Zusammengebautes vorderes Verstärkungsteil (5) für den Fahrgastraum nach einem der vorhergehenden Ansprüche, **dadurch gekennzeichnet, dass** der obere Flansch (611) so vorgesehen ist, dass er zumindest teilweise mit der Vorderflügelauskleidung (1) und einem Aufhängungsträger (2) verschweißt ist.

4. Zusammengefügtes vorderseitiges Verstärkungsteil (5) für den Fahrgastraum nach Anspruch 3, **dadurch gekennzeichnet, dass** der untere Flansch (621) vorgesehen ist, um mit der Auskleidung des vorderen Flansches (1) verschweißt zu werden.

5. Zusammengebautes vorderseitiges Verstärkungsteil (5) nach einem der vorhergehenden Ansprüche, **dadurch gekennzeichnet, dass** das Verstärkungsmittel (8, E) eine Dicke (E) des zusammengebauten vorderseitigen Verstärkungsteils (5) aufweist, die zwischen 1,2 mm und 1,4 mm liegt.

6. Anordnung, die durch eine Vorderflügelauskleidung (1), einen Aufhängungsträger (2) und eine Fahrgastseite (4) gebildet ist, die mit einem vorderen Verstärkungsteil auf der Fahrgastseite (5) nach einem der vorhergehenden Ansprüche ausgestattet ist.

7. Kraftfahrzeug mit mindestens einem Elektromotor, der geeignet ist, dem Kraftfahrzeug eine Bewegung zu verleihen, **dadurch gekennzeichnet, dass** das Kraftfahrzeug mit einer Anordnung nach Anspruch 6 versehen ist.

## Claims

1. Front reinforcing piece on the assembled passenger compartment side (5) intended to protect a passenger compartment of a motor vehicle, electric or hybrid, against a frontal impact, the front reinforcing piece on the assembled passenger compartment side (5) comprising a plate (6) which comprises an upper part (61) provided with an upper collar (611) and a lower part (62) provided with a lower collar (621) between which an intermediate part (63) is provided, the front reinforcing piece on the assembled passenger compartment side (5) being further provided with reinforcing means (8, E) mechanical strength of the front reinforcement piece on the assembled passenger compartment side (5), said reinforcement means (8, E) comprising a stiffener (8), the stiffener (8) comprising an upper portion (81) and an intermediate portion (83) arranged at right angles which are able to come into contact with the upper portion (61) and the lower portion (62) of the stiffener, **characterized in that** the intermediate portion (83) is provided with a welding lug (832) configured for welding to a pressed pellet (73) of a portion elongation (7) of the intermediate part (63).

2. Front reinforcement piece on the assembled passenger compartment side (5) according to claim 1, **characterized in that** the upper portion (81) is equipped with four fixing lugs (811a, 881b, 811c, 811d) of the stiffener (8), of which a first fixing lug (811a) configured for welding between the stiffener (8) and the front reinforcement piece on the assembled passenger compartment side (5), of which a second fixing lug (811b) configured for welding between the stiffener (8) and a lining front wing (1) through a first notch (612) provided inside an upper flange (611), a third fixing lug (811c) configured for welding between the stiffener (8) and the front reinforcement piece on the assembled passenger compartment side (5) and a fourth fixing lug (811d) configured for welding between the stiffener (8), the front reinforcement piece on the assembled passenger compartment side (5) and a passenger compartment side (4).

3. Front reinforcement piece on the assembled passenger compartment side (5) according to any one of the preceding claims, **characterized in that** the upper flange (611) is designed to be at least partially welded to the front wing lining (1) and a suspension support (2).

4. Front reinforcing piece on the assembled passenger compartment side (5) according to claim 3, **characterized in that** the lower flange (621) is designed to be welded to the front wing lining (1) .

5. Front reinforcement piece on the assembled passenger compartment side (5) according to any one of the preceding claims, **characterized in that** the reinforcement means (8, E) comprises a thickness (E) of the front reinforcement piece on the assembled passenger compartment side (5) which is between 1.2 mm and 1.4 mm.

6. Assembly formed by a front wing lining (1), a suspension support (2) and a passenger compartment side (4) equipped with a front reinforcement piece on the passenger compartment side assembled (5) according to any one of the preceding claims.

7. Motor vehicle provided with at least one electric motor capable of providing a displacement for the motor vehicle, **characterized in that** the motor vehicle is provided with an assembly according to claim 6.
